# EUROPÄISCHE PATENTSCHRIFT

(11) **EP 0 529 494 B1**
(45) Veröffentlichungstag und Bekanntmachung des Hinweises auf die Patenterteilung: **27.03.1996**
(21) Anmeldenummer: 92114118.0
(22) Anmeldetag: 19.08.1992
(51) Int. Cl.: G01B 5/00

(54) **Kantentaster mit Anzeigeeinrichtung**
Edge sensor with indicating device
Palpeur de bord avec dispositif indicateur

(30) Priorität: 24.08.1991 DE 4128105
(43) Veröffentlichungstag der Anmeldung: 03.03.1993
(73) Patentinhaber: HELMUT DIEBOLD GmbH & CO., GOLDRING-WERKZEUGFABRIK, D-72417 Jungingen (DE)
(72) Erfinder: Diebold, Hermann, W-7450 Hechingen (DE)
(74) Vertreter: Wasmuth, Rolf, Dipl.-Ing.

(56) Entgegenhaltungen:
- EP-A- 0 101 858
- DE-A- 3 125 737
- DE-A- 3 701 730

## Beschreibung

Die Erfindung betrifft einen Kantentaster, insbesondere zur Bestimmung der Lage eines Werkstückes in einer Bearbeitungsmaschine in der im Oberbegriff des Anspruches 1 angegebenen Gattung.

In der DE 31 25 737 A1 ist eine Werkstück-Meßsonde beschrieben, bei der in einem Gehäuse eine mit einem Tastkopf versehene Tastnadel beweglich angeordnet ist. Die Tastnadel besitzt an ihrem innerhalb des Gehäuses befindlichen Ende eine Tellerscheibe, die eine zentrische Vertiefung aufweist, in die ein kugelförmiges Ende eines Stößels eingreift. Dieser Stößel ist durch einen Transduktor geführt,in dem in Abhängigkeit von der axialen Bewegung des Stößels elektrische Signale erzeugt werden. Zur Übertragung der Signale an ein digitales Voltmeter außerhalb der Werkstück-Meßsonde sind entsprechende Verbindungsleitungen und Schaltelemente zur Signalaufbereitung vorgesehen.

Bei einer derartigen Anordnung wird bei Tastnadelbewegungen quer zur Längsrichtung der Tastnadel die Tellerscheibe verschwenkt, so daß die Bewegungsrichtung der Tastnadel nicht die gleiche ist wie die des durch den Transduktor geführten Stößels. Aus diesem Grund muß die Vertiefung in der Tellerscheibe vorgesehen und das vordere Ende des Stößels kugelkopfförmig ausgebildet werden, damit der sichere Eingriff beider Teile nicht verloren geht und ein Verklemmen vermieden wird. Trotzdem sind schräg oder quer auf den Stößel wirkende Kräfte nicht auszuschließen, so daß entweder eine aufwendige Lagerung des Stößels im Transduktor erforderlich ist oder Änderungen des Luftspalts im Transduktor in Kauf zu nehmen sind.

Ferner ist in der EP 0 101 858 A2 ein Mehrkoordinatentastkopf beschrieben, bei dem eine an der Tastnadel angeordnete Tellerscheibe mittels einer Vielzahl von Kugeln auf einem entsprechenden Gehäuserand des Tastkopfes abgestützt ist. Die Anzahl der Kugeln ist dabei entscheidend für die Genauigkeit des Meßergebnisses, da die Gerade zwischen zwei Kugeln jeweils die Kippachse der Tellerscheibe bestimmt. Ein in einem Meßwertumformer geführter Meßwertaufnehmer liegt mit seinem vorderen Ende an der ebenen Fläche der Tellerscheibe an, wozu das vordere Ende des Meßwertaufnehmers eine kugelabschnittförmige Gestalt besitzt.

Die bekannte Anordnung ist aufwendig und benötigt zum Schutz vor Verschmutzung eine Abdeckung, die die Tastnadel dichtend mittels eines Gelenkes umgibt. Die Krafteinleitung in den Meßwertaufnehmer erfolgt von der Tellerscheibe auf den Meßwertaufnehmer unter einem Winkel in Abhängigkeit von der seitlichen Auslenkung der Tastnadel. Da das kugelabschnittförmige Ende des Meßwertaufnehmers an der ebenen Fläche der Tellerscheibe anliegt, sind Querkräfte insbesondere bei starken Auslenkungen der Tastnadel nicht zu vermeiden

Aus der DE-OS 37 01 730 ist ein Tastmeßgerät bekannt, in dem in einem Gehäuse eine Anzeigeeinrichtung angeordnet ist und auf der Unterseite aus dem Gehäuse eine mit einem Tastkopf versehene Tastnadel ragt. Die Tastnadel ist allseitig schwenkbar gelagert, wobei sich annähernd gleich lange Abschnitte der Tastnadel zu beiden Seiten der Lagerachse erstrecken. Der innerhalb des Gehäuses befindliche Bereich der Tastnadel weist an seinem Ende eine Kugel auf, die in einer mit einer speziellen Krümmung versehenen Ausnehmung eines Schiebers aufgenommen wird. Eine seitliche Auslenkung der Tastnadel bei der Bestimmung von Werkzeugkanten bewirkt, daß der innerhalb des Gehäuses befindliche Abschnitt der Tastnadel eine seitliche Auslenkung erfährt und dabei die Kugel aufgrund der Krümmung der Ausnehmung den Schieber in axialer Richtung bewegt.

Die bekannte Anordnung ist wegen der komplizierten Formgebung des Schiebers und aufwendigen Lagerung der Tastnadel teuer in der Herstellung. Außerdem ist die Länge der Tastnadel innerhalb des Gehäuses entsprechend zu dimensionieren, damit aufgrund des Hebelarms eine ausreichende Kraft zur Bewegung des Schiebers zur Verfügung steht, da die Krafteinleitung auf den Schieber im wesentlichen quer zur Verschieberichtung erfolgt.

Es ist daher die Aufgabe der vorliegenden Erfindung, einen Kantentaster der im Oberbegriff des Anspruches 1 genannten Gattung zu schaffen, der bei möglichst geringem Bauraum und einfachem Aufbau eine leichte Handhabung gestattet.

Diese Aufgabe wird bei einem Kantentaster der genannten Art durch die Merkmale des Anspruches 1 gelöst.

Die besonderen Vorteile des Erfindungsgegenstandes sind darin zu sehen, daß unkompliziert gestaltete, billig herstellbare Einzelteile Verwendung finden und daß die Krafteinleitung in günstiger Weise erfolgt. Durch die Anordnung des Schiebestückes zwischen der Tellerscheibe und dem Stift kann der Durchmesser des Stiftes unabhängig vom Durchmesser der Tellerscheibe ausgeführt werden, da das Schiebestück das entsprechende Gegenlager für die Tellerscheibe bei deren Auslenkung aus der Horizontalen zur Längsmittelachse des Kantentasters bildet. Damit bei möglichst geringem Bauraum eine äußerst präzise Axialführung gewährleistet ist, wird vorgeschlagen, daß das Schiebestück topfförmig gestaltet ist und einen Boden sowie eine zylindrische Wand umfaßt, wobei die Außenseite des Bodens an der Tellerscheibe liegt und die Innenseite mit dem Stift in Wechselwirkung steht.

Es ist zweckmäßig, daß das Schiebestück und die Tellerscheibe in einem Führungselement beweglich gehalten sind. Am äußeren Ende des Führungsstückes ist es darüberhinaus vorteilhaft eine Scheibe zu befestigen, die eine zentrische Bohrung aufweist, durch welche die Tastnadel ragt. Eine solchermaßen aufgebaute Einheit aus Führungselement und Scheibe mit den darin enthaltenen geführten Teilen kann als vormontierte Baueinheit in eine von der Unterseite des Gehäuses ausgehende Bohrung eingesetzt und in dieser fixiert werden. Diese vorgefertigte Einheit ist leicht auswechselbar, was insbesondere dann vorteilhaft ist, wenn ein Kantentaster mit verschiedenen Tastköpfen bestückbar sein soll.

Das Führungselement ist im wesentlichen hülsenförmig ausgebildet und besitzt eine abgestufte Bohrung, wobei ein Abschnitt zur Aufnahme des Schiebestückes und der Tellerscheibe dient und im anderen Abschnitt der Stift gleitverschieblich gelagert ist. Auf diese Weise können beide Gleitpassungen, nämlich diejenige für das Schiebestück und diejenige für den Stift in einem Bauteil vorgesehen werden, wobei dieses Bauteil aus einem für die entsprechenden Gleitpassungen geeigneten Werkstoff besteht. Eine weitere Optimierung bezüglich des vorhandenen Bauraums ergibt sich dadurch, daß innerhalb des Abschnitts der abgestuften Bohrung eine von der zylindrischen Wand des Schiebestückes und dem Stift begrenzter Ringraum gebildet ist mit einer darin angeordneten Schraubenfeder, die einerseits das Schiebestück gegen die Tellerscheibe belastet und andererseits sich an einem radialen Bund des Führungselementes abstützt. Auf diese Weise wird die erforderliche axiale Länge des Kantentasters minimal gehalten.

Zur Reduzierung des Reibmomentes zwischen dem Schiebestück und dem Führungselement bei unverändert guter axialer Führung wird vorgeschlagen, daß an der Mantelfläche der zylindrischen Wand des Schiebestückes ein Abschnitt mit geringerem Außendurchmesser vorgesehen ist. Dieser Abschnitt mit geringerem Außendurchmesser befindet sich zwischen zwei endseitigen Abschnitten, die den entsprechenden Gleitsitz bilden. Damit eine zentrische Positionierung der Tastnadel gewährleistet und dabei die Tellerscheibe mit geringem Kraftaufwand verschwenkbar ist wird vorgeschlagen, daß die Tellerscheibe an ihrer Mantelfläche ballig oder kugelabschnittförmig gestaltet ist. Zur Reduzierung der erforderlichen Einzelteile sind die Tellerscheibe, die Tastnadel und der Tastkopf einstückig ausgeführt. Um Beschädigungen des Kantentasters bei Überschreitung von zulässigen Querkräften auf die Tastnadel zu vermeiden, weist die Tastnadel einen eingeschnittenen Bereich auf, der als Sollbruchstelle bei Kraftüberschreitung dient. Damit innerhalb des bekannten Tasters keine dichtend abgeschlossenen Hohlräume geschaffen werden, in denen Luft komprimiert oder ein Unterdruck erzeugt wird, durch welche die exakte Anlage der in Wechselwirkung bestehenden Teile beeinträchtigt würde, weist das Schiebestück in seinem Boden eine achsparallele Bohrung mit geringem Durchmesser auf, und in dem Führungselement ist eine parallel zum Bohrungsabschnitt verlaufende Ausgleichsbohrung vorgesehen.

Ein Ausführungsbeispiel des erfindungsgemäßen Kantentasters ist nachstehend anhand der Zeichnungen näher erläutert. In der Zeichnung zeigt:
- Fig. 1: die Vorderansicht eines Kantentasters, teilweise im Schnitt,
- Fig. 2: eine vergrößerte Darstellung des Schnittes durch den unteren Teil des Kantentasters,
- Fig. 3: eine Ansicht des Gehäuses ohne eingebaute Tastnadel von unten,
- Fig. 4: einen Schnitt entlang der Linie IV-IV in Fig. 1,
- Fig. 5: eine Ansicht in Richtung des Pfeiles V in Fig. 4, teilweise im Schnitt,
- Fig. 6: eine Darstellung eines Schiebestückes als Einzelteil,
- Fig. 7: ein Führungselement für das Schiebestück.

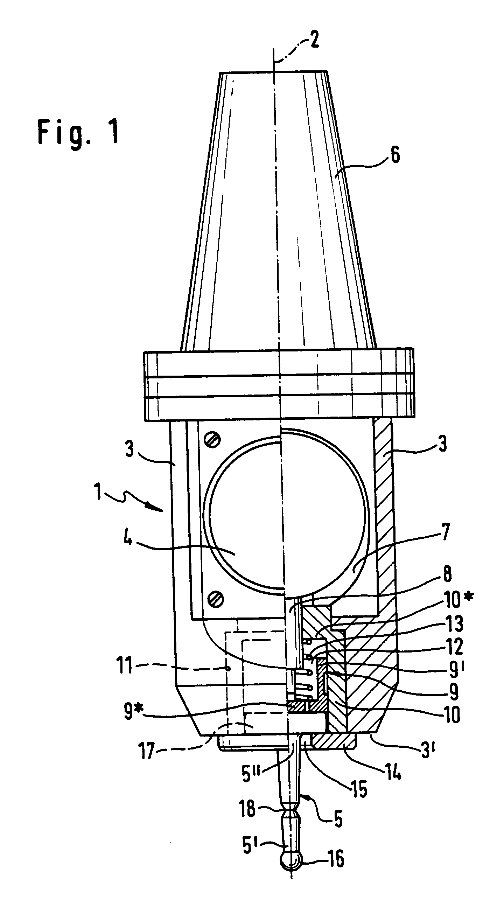

In Fig. 1 ist ein Kantentaster 1 dargestellt, wobei - bezogen auf eine Längsmittelachse 2 - die linke Seite die Vorderansicht und die rechte Seite einen Längsschnitt durch den Kantentaster 1 zeigt. Der Kantentaster umfaßt im wesentlichen ein Gehäuse 3 mit einer an dessen Vorderseite angeordneten Anzeigeeinrichtung 4, einer auf der Unterseite 3' aus dem Gehäuse 3 hervorstehenden Tastnadel 5 und einem am oberen Ende gebildeten Konus 6, der zur Aufnahme des Kantentasters 1 in einem Werkzeugträger einer in der Zeichnung nicht dargestellten Bearbeitungsmaschine vorgesehen ist. Die Anzeigeeinrichtung 4 ist im Ausführungsbeispiel ein analoges Zeigerinstrument. Das Gehäuse 3 besitzt einen Hohlraum 7, in welchen die Anzeigeeinrichtung 4 aufgenommen wird.

Auf die Anzeigeeinrichtung 4 wirkt ein axial verschiebbarer Stift 8, der mit einem Schiebestück 9 in Wechselwirkung steht. Das Schiebestück 9 ist topfförmig und in einem Führungselement 10 gelagert, welches wiederum in eine-bezogen auf die Längsmittelachse 2 - zentrische Bohrung 11 des Gehäuses 3 eingesetzt ist. Das topfförmige Schiebestück 9 ist mit einem offenen Ende dem Stift 8 zugewandt, so daß der Stift 8 an der Innenseite des Bodens 9* des Schiebestückes 9 anliegt. Zwischen der zylindrischen Wand 9' des Schiebestückes 9 und dem Stift 8 ist ein Ringraum 12 gebildet, in dem eine den Stift 8 konzentrisch umgebende Schraubenfeder 13 angeordnet ist, die sich einerseits an dem Boden 9* und andererseits an einem radialen Bund 10* des Führungselementes 10 abstützt.

Das Führungselement 10 ist in die Bohrung 11 des Gehäuses 3 gepreßt. Es kommen jedoch auch andere geeignete Befestigungsmaßnahmen in Betracht. Am unteren bzw. äußeren Ende ist an dem Führungselement 10 eine Scheibe 14 befestigt, die eine zentrische Bohrung 15 aufweist. Der Außendurchmesser der Scheibe 14 ist größer als derjenige des Führungselementes 10, so daß eine Ringfläche der Scheibe an der Unterseite 3' des Gehäuses 3 anliegt. Durch die Bohrung 15 der Scheibe 14 ragt die Tastnadel 5, welche an ihrem äußeren Ende 5' einen ringförmigen Tastkopf 16 trägt, und deren inneres Ende 5'' sich an einer Tellerscheibe 17 befindet. Die Tellerscheibe 17 mit der Tastnadel 5 und dem Tastkopf 16 sind vorzugsweise einstückig ausgeführt.

Die Tellerscheibe 17 liegt in ihrer Ausgangslage oder Grundstellung einerseits an dem Boden 9* des Schiebestückes 9 und andererseits an der Scheibe 14, gegen die sie mittels der Schraubenfeder 13 belastet ist. Die Tastnadel 5 ist mit einem eingeschnürten Abschnitt 18 versehen, der zur Sollbruchstelle bei Überschreitung von maximal zulässigen Querkräften dient. Die Tellerscheibe 17, welche die Tastnadel 5 mit dem Tastkopf 16 trägt, das Schiebestück 9 und der Stift 8 liegen spielfrei aneinander, so daß eine durch Krafteinwirkung auf den Tastkopf 16 erzeugte Bewegung als entsprechende Längsverschiebung des Stiftes 8 auf die Anzeigeeinrichtung 4 übertragen wird.

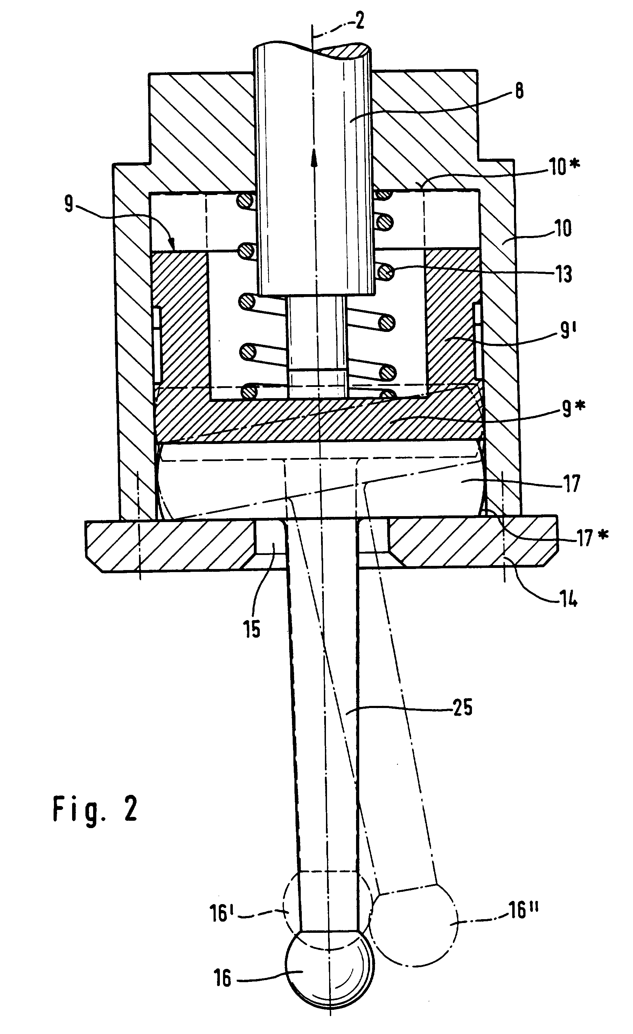

Wie aus Fig. 2 hervorgeht, ist die Mantelfläche 17* der Tellerscheibe 17 ballig ausgeführt. Dadurch wird erreicht, daß bei exakter zentrischer Führung das Reibmoment verringert wird und bei einer Auslenkung des Tastkopfes 16 quer zur Längsmittelachse 2 ein Verklemmen der Tellerscheibe in dem Führungselement 10 vermieden wird. Die einstückig mit der Tellerscheibe 17 ausgeführte Tastnadel 25 besitzt alternativ zu derjenigen in Fig. 1 keine "Sollbruchstelle"; letztere kann jedoch ohne weiteres auch vorgesehen werden. Im übrigen stimmen die in Fig. 2 dartgestellten Teile und Bezugszeichen mit Fig. 1 überein.

Es ergibt sich aus Fig. 2 außerdem, daß das Führungselement 10 mit in der Scheibe 14 und den innerhalb des Führungselementes 10 aufgenommenen Teilen (Stift 8, Schiebestück 9, Schraubenfeder 13 und Tellerscheibe 17) eine Baueinheit bildet, die komplett in das Gehäuse 3 eingesetzt oder aus diesem herausgenommen werden kann. Die Einwirkung von Kräften auf den Tastkopf bei Berührung mit einer (in der Zeichnung nicht dargestellten) Kante ist ebenfalls aus Fig. 2 ersichtlich, wobei zwei Beispiele der Erfassung von Strecken mit gestrichelt gezeichneter Position des Tastkopfes 16 bzw. der Tastnadel 25 und der Tellerscheibe 17 gezeigt sind.

Wird der in Fig. 1 dargestellte Kantentaster 1 auf ein Werkstück zubewegt, so bleibt die Tastnadel in ihrer Normallage, solange der Tastkopf 16 nicht in Berührung mit dem Werkstück kommt. Die Anlage des Tastkopfes 16 an der Oberfläche des Werkstückes wird noch nicht erfaßt und auch nicht angezeigt, doch bei weiterer Bewegung des Kantentasters 1 bleibt der Tastkopf 16 stehen, und es erfolgt eine Relativbewegung gegenüber dem Gehäuse 3. Wird der Kantentaster 1 in Richtung auf ein unter ihm befindliches Werkstück gefahren, dann wird gemäß Darstellung in Fig. 2 der Tastkopf 16 in die Position 16' verschoben. Dabei dient der erste Abschnitt des Verschiebeweges, der dem Radius des Tastkopfes entspricht, der Feststellung des Neupunktes. Die sich daran anschließende Relativbewegung wird über die Tastnadel 25 und die Tellerscheibe 17 auf das Schiebestück 9 übertragen, das gegen die Kraft der Schraubenfeder 13 nach oben zurückweicht und in gleichem Maß den Stift 8 verschiebt. Das Maß des Verschiebeweges wird auf die Anzeigeeinrichtung 4 übertragen und kann dort von der Bedienungsperson abgelesen werden.

Bei einer Bewegung des Kantentasters 1 quer zur Längsmittelachse 2 zur Erfassung der seitlichen Kanten eines Werkstückes bleiben Tastkopf 16 und Tastnadel 5 bzw. 25 in ihrer Normalstellung, bis der Tastkopf an das Werkstück gelangt. Die Feststellung des Nullpunktes wird ebenfalls durch den Radius des Tastkopfes bestimmt. Fig. 2 zeigt, daß bei weiterer Bewegung des Kantentasters 1 die Tastnadel 25 seitlich geschwenkt wird und eine Winkellage zur Längsmittelachse 2 einnimmt. Der Tastkopf befindet sich nun in der Position 16'', wobei sein Abstand von der Längsmittelachse 2 als meßbare Größe vorliegt. Durch die Winkellage der Tastnadel 25 wird auch die Tellerscheibe 17 um einen Auflagepunkt ihres Randes geschwenkt und bewegt somit durch das diametral entgegengesetzte Ende das Schiebestück 9 nach oben. Da die Lage der Tastnadel 25 und der Radius der Tellerscheibe 17 aufeinander abgestimmt sind, entspricht der Verschiebeweg des Verschiebestückes 9 und somit auch des Stiftes 8 dem Maß der seitlichen Ablenkung des Tastkopfes 16''. An der Anzeigeeinrichtung 4 kann daher das Maß des Verschiebeweges des Tastkopfes direkt abgelesen werden.

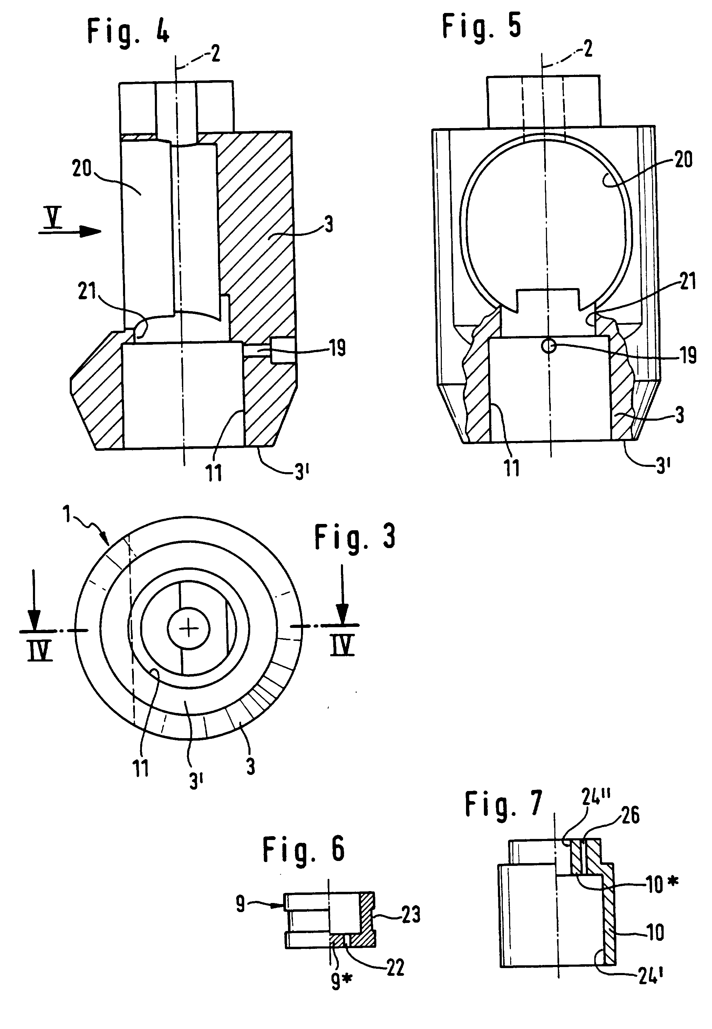

In Fig. 3 ist das Gehäuse 3 des Kantentasters 1 von unten ohne Einbauteile dargestellt. Die Bohrung 11 dient zur Aufnahme des Führungselementes und die Unterseite 3' zur Anlage der Scheibe. Mit der Linie IV-IV ist der Schnitt gemäß Darstellung in Fig. 4 angegeben. Das geschnittene Gehäuse 3 zeigt die Bohrung 11 zur Aufnahme des Führungselementes (in Fig. 1).Im Bereich des innenliegenden Endes der Bohrung 11 ist eine Radialbohrung 19 vorgesehen, die zur Aufnahme einer Fixierschraube dient. In Richtung der Längsmittelachse 2 gesehen schließt sich eine die Gehäusewand durchdringende und im wesentlichen kreisförmige Öffnung 20 an, die zur Aufnahme der in Fig. 1 gezeigten Anzeigevorrichtung 4 dient.

Mit dem Pfeil V in Fig. 4 ist die Ansicht des Gehäuses 3 in Fig. 5 gezeigt, allerdings ist der untere Bereich des Gehäuses geschnitten, wodurch die Bohrung 11 und die Radialbohrung 19 sind. An die Bohrung 11 schließt sich ein weiterer Bohrungsabschnitt 21 mit geringerem Durchmesser an, wobei dieser Bohrungsabschnitt vom in Fig. 1 gezeigten Stift 8 durchsetzt wird, so daß dieser mit der Anzeigeeinrichtung in Eingriff bringbar ist.

Fig. 6 zeigt das Schiebestück 9 als Einzelteil, teilweise im Schnitt. Im Boden 9* des Schiebestückes befindet sich eine kleine Bohrung 22, die der Entlüftung bzw. Belüftung dient, damit keine abgeschlossenen Räume entstehen, in denen bei Bewegung der Teile Luft komprimiert wird. Dies würde zu erheblichen Meßfehlern führen. An der Mantelfläche der zylindrischen Wand 9' des Schiebestückes 9 ist ein Abschnitt 23 mit einem geringeren Außendurchmesser vorgesehen. Dadurch wird erreicht, daß bei unverändert guter Führung im Führungselement 10 das Reibmoment verringert wird.

In Fig. 7 ist das Führungselement 10 als Einzelteil dargestellt, wobei die rechte Seite dieser Figur einen Schnitt durch das im wesentlichen hülsenförmige Führungselement zeigt. In dem hülsenförmigen Körper befindet sich eine abgestufte Bohrung 24' und 24'', wobei der Abschnitt 24' zur Aufnahme des Schiebestückes 9 dient, und durch den Abschnitt 24'' der Stift 8 ragt. Zwischen den Abschnitten 24' und 24'' befindet sich der bereits in Fig. 1 beschriebene radiale Bund 10*. Parallel zum Bohrungsabschnitt ist eine Ausgleichsbohrung 26 vorgesehen, die an dem radialen Bund 10* mündet und deren Funktion gleich der Bohrung 22 in Fig. 6 ist.

## Patentansprüche

1. Kantentaster, insbesondere zur Bestimmung der Lage eines Werkstückes in einer Bearbeitungsmaschine, bei dem in einem Gehäuse (3) eine mit einem Tastkopf (16) versehene Tastnadel (5) an einer Tellerscheibe (17) angeordnet und gegen die Kraft einer Feder (13) beweglich gelagert ist und wobei die Tellerscheibe (17) in einer sich senkrecht zur Längsachse der Tastnadel (5, 25) erstreckenden Ebene liegt und sowohl axial verschieblich als auch um einen beliebigen Punkt ihres äußeren Umfangs schwenkbar gelagert ist und die Tellerscheibe (17) mit einem in Längsrichtung einer Bohrung (11) des Gehäuses (3) axial verschieblichen Stift (8) in Wechselwirkung steht und eine Anzeigeeinrichtung vorgesehen ist,
dadurch gekennzeichnet, daß die Anzeigeeinrichtung (4) in dem Gehäuse (3) aufgenommen ist und daß zwischen der Tellerscheibe (17) und dem Stift (8) ein Schiebestück (9) angeordnet ist, wobei das Schiebestück (9) und die Tellerscheibe (17) im wesentlichen gleiche Durchmesser aufweisen, und die Feder (13) das Schiebestück (9) gegen die Tellerscheibe (17) belastet und daß das Schiebestück (9) längsverschieblich gelagert ist und mit dem Stift (8) zusammenwirkt, so daß dieser die Anzeigevorrichtung (4) betätigt.

2. Kantentaster nach Anspruch 1,
dadurch gekennzeichnet, daß das Schiebestück (9) topfförmig gestaltet ist und einen Boden (9*) sowie eine zylindrische Wand (9') umfaßt, wobei die Außenseite des Bodens (9*) an der Tellerscheibe (17) liegt und die Innenseite mit dem Stift in Wechselwirkung steht und vorzugsweise in dem Boden (9*) des Verschiebestückes (9) eine achsparallele Bohrung (22) mit geringem Durchmesser angeordent ist.

3. Kantentaster nach Anspruch 1 oder 2,
dadurch gekennzeichnet, daß das Schiebestück (9) und die Tellerscheibe (17) in einem Führungselement (10) beweglich gehalten sind.

4. Kantentaster nach Anspruch 3,
dadurch gekennzeichnet, daß das Führungselement (10) im wesentlichen hülsenförmig ausgebildet ist und eine abgestufte Bohrung (24', 24") besitzt, wobei ein Abschnitt (24') zur Aufnahme des Schiebestückes (9) und der Tellerscheibe (17) dient und im anderen Abschnitt (24") der Stift (8) gleitverschieblich gelagert ist, wobei vorzugsweise in dem Führungselement (10) eine parallel zum Bohrungsabschnitt (24") verlaufende Ausgleichsbohrung (26) vorgesehen ist.

5. Kantentaster nach Anspruch 4,
dadurch gekennzeichnet, daß innerhalb des Abschnitts (24') der abgestuften Bohrung ein von der zylindrischen Wand (9') des Schiebestückes (9) und dem Stift (8) begrenzter Ringraum (12) gebildet ist mit einer darin angeordneten Schraubenfeder (13), die einerseits das Schiebestück (9) gegen die Tellerscheibe (17) belastet und andererseits sich an einem radialen Bund (10*) des Führungselementes (10) abstützt.

6. Kantentaster nach einem der Ansprüche 2 bis 5,
dadurch gekennzeichnet, daß an der Mantelfläche der zylindrischen Wand (9') des Schiebestückes (9) ein Abschnitt (23) mit geringerem Außendurchmesser vorgesehen ist.

7. Kantentaster nach einem der Ansprüche 1 bis 6,
dadurch gekennzeichnet, daß die Tellerscheibe (17) an ihrer Mantelfläche (17*) ballig oder kugelabschnittförmig gestaltet ist und die Tastnadel (5) vorzugsweise einen eingeschnittenen Bereich (18) aufweist.

8. Kantentaster nach einem der Ansprüche 1 bis 7,
dadurch gekennzeichnet, daß die Tellerscheibe (17) die Tastnadel (5, 25) und der Tastkopf (16) einstückig ausgeführt sind.

9. Kantentaster nach einem der Ansprüche 3 bis 5,
dadurch gekennzeichnet, daß das Führungsstück (10) in eine von der Unterseite (3') des Gehäuses (3) ausgehende Bohrung (11) eingesetzt und in dieser fixiert ist, wobei vorzugsweise am äußeren Ende des Führungsstückes (10) eine Scheibe (14) befestigt ist, die eine zentrische Bohrung (15) aufweist, durch welche die Tastnadel(5, 25) ragt.

10. Kantentaster nach einem der Ansprüche 1 bis 9,
dadurch gekennzeichnet, daß in dem Gehäuse (3) eine orthogonal zur Längsmittelachse (2) verlaufende und im wesentlichen kreisförmige Öffnung (20) angeordnet ist, die zur Aufnahme der Anzeigeeinrichtung dient.

## Claims

1. An edge sensor with indicating device, characterized through the ability to define the position of a workpiece in the workroom of a machine tool so that inside a housing (3) a touch needle (5) equipped with a touch head (16) is connected to a round disc (17) which is movable against the force of a spring (13) and wherein the round disc (17) lays within a 90 degrees angle to the touch needle (5,25) and is movable in axial direction as well as towards any point of her circumference and the round disk (17) is in movable connection with a bolt (8) that is movable in length direction of a bore (11) of the housing (3) and an inidicating device is forseen characterized in that the indicating device (4) is located in the housing (3) and that between the round disc (17) and the bolt (8) a movable piece (9) is located, wherein the movable piece (9) and the round disc (17) are of the same diameter and the spring (13) and the movable piece (9) put force angainst the round disc (17) and that the movable piece (9) is length movable and works together with the bolt (8) so that the bolt (8) moves the indicating device (4).

2. Edge sensor of claim 1 characterized in that the movable piece (9) has the form of a pot and has a floor (9*) and a cylindrical wall (9') whereat the outside part of the floor (9*) lays at the round disc (17) and the inside part is connected to the bolt and where preferred in the bottom of the floor (9*) of the movable piece (9) there is a parallel bore (22).

3. Edge sensor of claim 1 or 2 characterized in that the movable part (9) and the round disc (17) are movable held in a lead element (10).

4. Edge sensor of claim 3 characterized in that the lead element (10) has the prefered form of a sleeve and has a bore with different diameters (24',24"), wherein one part (24') is designed to hold the movable piece (9) and the round disc (17) and the other part (24") the bolt (8) is moveable lead, wherein preferred the lead element (10) has a parallel bore (26) that is parallel to the other part (24').

5. Edge sensor of claim 4 characterized in that inside the part (24') of the bore with different diameters there is a round room (12) that is limited by the wall (9') of the moveable piece (9) and the bolt (8) with an inside there connected spring (13) that forces the movable piece (9) against the round disc (17) and is supported through a radial face (10*) of the lead element (10).

6. Edge sensor of claim 2 to 5 characterized in that at the cylindrical wall (9') of the movable piece (9) there is a groove (23) with smaller outer diameter.

7. Edge sensor of claim 1 to 6 characterized in that the round disc (17) at her outer diameter has a rounded surface (17*) and that the touch needle (5) preferred has a groove (18).

8. Edge sensor of claim 1 to 7 characterized in that the round disc (17) , the touch needle (5,25) and the touch head (16) are preferred of one piece.

9. Edge sensor of claim 3 to 5 characterized in that the lead element (10) is fixed in a bore (11) in the ground part (3')of the housing (3) whereat preferred at the outer end of the lead element (10) a disc (14) ist connected that has a centrical bore (15) through which the touch needle (5,25) is lead.

10. Edge sensor of claim 1 to 9 characterized in that the housing (3) has an orthogonal to the middle axis (2) orientated round bore (20) in which the indicating device is located.

## Revendications

1. Palpeur de bord avec dispositif indicateur spécialement utilisable pour spécifier la position d'une pièce à travailler dans une machine opératrice, dans lequel une aiguille de touche (5) dans un carter (3) munie d'une tête de touche (16) est disposée à une disque assiette (17) mobile contre la force d'un ressort (13); la disque assiette (17) située dans une plaine en verticalité à l'axe longitudinal de l'aiguille de touche (5, 25) non seulement est déplaçable axialement mais encore orientable autour d'un point quelconque de sa circonférence et la disque assiette (17) tient une action réciproque avec une goupille (8) axialement déplaçable en sens longitudinal d'un forage (11) dudit carter (3), et un dispositif indicateur est prévu, caractérisé en ce que le dispositif indicateur (4) est situé dans le carter (3) et qu'une pièce mouvante (9) est arrangée entre la disque assiette (17) et la goupille (8), la pièce mouvante (9) et la disque assiette (17) essentiellement présentant les mêmes diamètres; et le ressort (13) soumet la pièce mouvante (9) à un effort contre la disque assiette (17) et en ce que la pièce mouvante (9) est déplaçable longitudinalement en opérant en commun avec la goupille (8) de sorte que la goupille commende le dispositif indicateur (4).

2. Palpeur de bord selon la revendication 1,
caractérisé en ce que la pièce mouvante (9) a la forme d'un pot comportant un fond (9*) aussi qu'un mur cylindrique (9'), la face extérieure du fond (9*) se trouvant à la disque assiette (17) et la face intérieure tenant une action réciproque avec la goupille et un forage parallèle à l'axe (22) avec un petit diamètre est disposé de préférence dans le fond (9*) de la pièce mouvante (9).

3. Palpeur de bord selon la revendication 1 ou 2,
caractérisé en ce que la pièce mouvante (9) et la disque assiette (17) sont soutenues mobilement dans un élément de guidage (10).

4. Palpeur de bord selon la revendication 3,
caractérisé en ce que l'élément de guidage (10) essentiellement a la forme d'une douille et offre un forage étagé (24', 24"), une partie (24') servant à soulever la pièce mouvante et la disque assiette (17) et dans l'autre partie (24") la goupille (8) est déplaçable glissant, de préférence dans l'élément de guidage (10) un forage compensateur (26) parallèle à la partie de forage (24") est prévu.

5. Palpeur de bord delon la revendication 4,
caractérisé en ce que un espace annulaire (12) est formé dedans de la partie (24') du forage étagé par le mur cylindrique (9') de la pièce mouvante (9) et la goupille (8) avec un ressort à boudin (13) arrangé dedans que soumet la pièce mouvante (9) à un effort contre la disque assiette (17) d'une part et que se supporte à un collet radial (10*) de l'élément de guidage (10).

6. Palpeur de bord selon une des revendications 2 à 5,
caractérisé en ce que une partie (23) avec un diamètre extérieur plus petit est prévu sur le plan du mur cylindrique (9') de la pièce mouvante.

7. Palpeur de bord selon une des revendications 1 à 6,
caractérisé en ce que la disque assiette (17) a la forme bombée ou de segment de sphère à son diamètre extérieur (17*) et l'aiguille de touche (5) de préférence offre une zone entaillée.

8. Palpeur de bord selon une des revendications 1 à 7,
caractérisé en ce que la disque assiette (17), l'aiguille de touche (5,25) sont constituées par une seule pièce.

9. Palpeur de bord selon une des revendications 3 à 5,
caractérisé en ce que l'élément de guidage (10) est inséré et fixé dans un forage (11) au dessous (3') du carter (3), de préférence au bout de l'élément de guidage (10) une disque (14) est fixée montrant un forage centrique (15) que l'aiguille de touche (5, 25) transperce.

10. Palpeur de bord selon une des revendications 1 à 9,
caractérisé en ce que dedans du cadre (3) une aperture essentiellement circulaire orthogonalement disposée à l'axe longitudinal est arrangée servant à reprendre le dispositif indicateur.
